# EUROPÄISCHE PATENTSCHRIFT

(11) **EP 2 329 241 B1**
(45) Veröffentlichungstag und Bekanntmachung des Hinweises auf die Patenterteilung: **22.05.2013**
(21) Anmeldenummer: 09744931.8
(22) Anmeldetag: 23.09.2009
(51) Int. Cl.: G01L 9/00

(54) **VORRICHTUNG ZUR DRUCKMESSUNG VON MEDIEN IN HOHLKÖRPERN; VERFAHREN ZUR MESSUNG DES DRUCKS VON MEDIEN IN HOHLKÖRPERN**
APPARATUS FOR MEASURING THE PRESSURE OF MEDIA IN HOLLOW BODIES AND METHOD FOR MEASURING THE PRESSURE OF MEDIA IN HOLLOW BODIES
DISPOSITIF DE MESURE DE PRESSION DE FLUIDES DANS DES CORPS CREUX; PROCÉDÉ DE MESURE DE LA PRESSION DE FLUIDES DANS DES CORPS CREUX

(30) Priorität: 23.09.2008 DE 102008048578
(43) Veröffentlichungstag der Anmeldung: 08.06.2011
(73) Patentinhaber: Asentec GmbH, 74076 Heilbronn (DE)
(72) Erfinder: KRÜGER, Roland, 73525 Schwäbisch Gmünd (DE); WEISS, Horst, 74906 Bad Rappenau (DE); HIMMELHAN, Bernhard, 74172 Neckarsulm (DE)
(74) Vertreter: Schuster, Müller & Partner
(86) Internationale Anmeldenummer: PCT/DE2009/001314
(87) Internationale Veröffentlichungsnummer: WO 2010/034291

(56) Entgegenhaltungen:
- EP-A1- 0 283 524
- EP-A1- 0 618 058
- EP-A1- 0 720 006
- US-A- 4 179 939

## Beschreibung

### Stand der Technik

Die Erfindung betrifft eine Messvorrichtung sowie ein Verfahren zum Messen wenigstens einer Messgröße, insbesondere von Druck von Medien.

In der Messtechnik werden zur Erfassung von Messgrößen prozessnah installierte Messsysteme verwendet, die jeweils direkt an dem Mediumsbehälter oder einer Zuführung angebracht sind. Zum Erfassen der jeweiligen Messgrößen weisen Messsysteme jeweils einen entsprechenden Messaufnehmer auf, der in den Verlauf einer Medium führenden Prozessleitung eingesetzt ist und der dazu dient, wenigstens ein die primär erfasste Messgröße möglichst genau repräsentierendes, insbesondere elektrisches, Messsignal zu erzeugen. Dafür ist der Messaufnehmer üblicherweise mit einem in den Verlauf der jeweiligen Prozessleitung, dem Führen von strömendem Medium dienenden Messrohr sowie eine entsprechende physikalisch-elektrische Sensoranordnung ausgestattet. Diese wiederum weist wenigstens ein primär auf die zu erfassende Messgröße oder auch Änderungen derselben reagierendes Sensorelement auf, mittels dem im Betrieb wenigstens ein von der Messgröße entsprechend beeinflusstes Messsignal erzeugt wird.

Drucksensoren bestehen üblicherweise aus einem mechanischen Messaufnehmer, beispielsweise einer Membran, und einem zur Detektion einer Messgröße, beispielsweise einer Auslenkung oder einer Kraft, des mechanischen Messaufnehmers notwendigen elektischen Sensors, beispielsweise einem Abstandssensor. Der mechanische Messaufnehmer und der Abstandssensor sind dabei in einem gemeinsamen, externen Gehäuse integriert. Der Drucksensor steht dabei in direktem Kontakt mit dem Medium.

Die bekannten Messsysteme benötigen häufig zur Messung von Messgrößen, insbesondere zum Messen von Drücken der durchströmenden Medien, Messaufnehmer, die in den Bereich innerhalb der Durchflusskörper eingreifen.

Bekannt ist ein "Verfahren zur nichtinvasiven Innendruckmessung in elastischen Gefäßen" (DE 197 47 254 C2), bei dem ein Gefäß von außen durch Aufbringen einer Kraft verformt und eine Reaktionskraft gemessen wird, ohne dass die Gefäßoberfläche verändert werden muss noch eine Verbindung zwischen dem Gefäßinneren und der Messsensorik erforderlich ist. Danach wird rechnerisch die Relaxationsfunktion des Schlauches mit einer vorgegebenen Funktionsart, die vom verwendeten Material des Schlauches abhängig ist, ermittelt, deren Parameter aus den gemessenen Reaktionskräften errechnet werden.

Dabei fließen jedoch außer dem Druck auch andere Werte, wie z. B. die Temperatur, in die Messungen mit ein. Bei bekannten nichtinvasiven Messverfahren wirkt der mechanische Messaufnehmer wie eine Membran oder ist membranähnlich ausgestaltet, d. h. dass die Auslenkung des mechanischen Messaufnehmers sich ähnlich der Auslenkung einer Membran verhält, oder aber der mechanische Messaufnehmer weist die Eigenschaften einer dünnen oder dicken Scheibe auf. Der Messaufnehmer ist dabei beispielsweise auf dem Boden eines Sacklochs positioniert.

Des Weiteren sind durch EP 0 618 058 A1, EP 0 720 006 A1, US 4,179,939 A und EP 0 283 524 A1 Verfahren und Vorrichtungen zum Messen von Drücken in rohrförmigen Körpern bekannt. Nachteilig ist allerdings, dass diese Systeme, da sie für die Druckmessung zusätzliche mechanische Teile benötigen, konstruktiv aufwändig und damit auch störanfällig sind.

### Die Erfindung und ihre Vorteile

Die Erfindung gemäß den Merkmalen des Hauptanspruchs 1 sowie das Verfahren gemäß dem Nebenanspruch 14 haben dahingegen den Vorteil, dass die Messvorrichtung ein Messkörper zur Erfassung von Druck beliebiger ruhender oder strömender Medien in der Ausgestaltung eines Verformkörpers ist, dessen Wandstärke speziell geschwächt ist. Es handelt sich daher in einer vorteilhaften Ausgestaltung um einen Dehnring-Drucksensor, der in seiner einfachsten Ausführung aus einem zylindrischen Rohr besteht, das einen Schlitz in Längsrichtung besitzt. Allerdings sind alle geometrischen Formen als Ausführung für diesen Messkörper denkbar. Dieser Messkörper ist als intrinsischer Sensor ausgestaltet.

Dabei wird vorzugsweise nicht die Aufweitung des Rohres erfasst, sondern im speziellen die Aufweitung des Schlitzes. Dabei ergibt sich eine von der Schlitztiefe abhängige Verstärkung der Aufweitung. Der geschwächte Bereich selbst kann unterschiedlich geformt ausgestaltet sein, beispielsweise in V-Form, als orthogonale bzw. U-förmige Nut, als angeschnittene Bohrung oder mit einem als Kreisabschnitt ausgebildeten Querschnitt o. ä..

Die Erfassung der druckabhängigen Aufweitung wird mit beliebigen Messprinzipien bzw. Messverfahren erfasst, beispielsweise mittels Längenmessung, optischer Längenmessung, mit Dehnmessstreifen, kapazitiv, induktiv, rein mechanisch, hydraulisch, pneumatisch odgl.. Die Konfiguration des Messkörpers kann mehrfach hintereinander angewendet werden, beispielsweise in Längsrichtung der Strömung des Mediums als Differenzdruckmessung an mindestens zwei Messstellen.

Vorzugsweise ist bei der Messung der Aufweitung des Schlitzes der Messabnehmer an der Oberfläche des Rohres in unmittelbarer Nähe des Schlitzes positioniert. Somit wird durch den Messabnehmer die Breitenänderung, also die Aufweitung des Schlitzes gemessen. Bevorzugt ist die Schlitzbreite nahezu null zu wählen, wodurch der Temperaturkoeffizient des Nullpunktes des Systems ebenfalls gegen null strebt.

Nach einer vorteilhaften Ausgestaltung der Erfindung erfolgt die Anwendung als Blutdruckmessgerät oder Einmalsensor in der Medizintechnik, aber auch zur hochdynamischen Druckmessung direkt in Düsen, beispielsweise beim Spritzgießen. Dabei kann der Messkörper in einem Verbindungsteil einer bestehenden Maschine nachgerüstet werden, z. B. bei der Messung von Hydraulikdruck.

Vorteilhaft ist, dass der Messkörper nicht invasiv arbeitet, d. h. dass kein in das Medium hineinragender Sensor vorhanden ist, der die glatten Innenflächen des Durchflusskörpers beeinträchtigt. Dabei kann die Medium führende Bohrung an die Form des Flusskanals adaptiert werden, so dass kavitative Formen weitergeführt werden. Dadurch können schlitzförmige Querschnitte von Durchflusskörpern wie auch querschnittsverengende oder -erweiternde Formen sowie Kombinationen aller Ausführungen realisiert werden.

Nach einer vorteilhaften Ausgestaltung der Erfindung ist der Messkörper ein integraler Bestandteil des Medien führenden Systems, also beispielsweise die Medienzuleitung oder die Düse, beispielsweise einer Spritzgießmaschine, selbst.

Weitere Vorteile und vorteilhafte Ausgestaltungen der Erfindung sind der nachfolgenden Beschreibung, den Zeichnungen und den Ansprüchen entnehmbar.

### Zeichnungen

Fig. 1 zeigt einen Querschnitt durch ein Rohr.
In Fig. 2 ist die druckinduzierte Aufweitung einer nutförmigen Aussparung in überhöhter Lage gezeigt.
Fig. 3 zeigt die Deformation des Querschnitts A bei einem Innendruck von 500 bar in 100-fach überhöhter Darstellung nach einer FEM Analyse.
Fig. 4 zeigt schematisch eine Kondensatoranordnung zur Druckmessung.
Fig. 5 zeigt schematisch ein optisches Messsystem zur Druckmessung.
Fig. 6 zeigt schematisch eine Dehnmesseinrichtung zur Druckmessung.

### Beschreibung der Ausführungsbeispiele

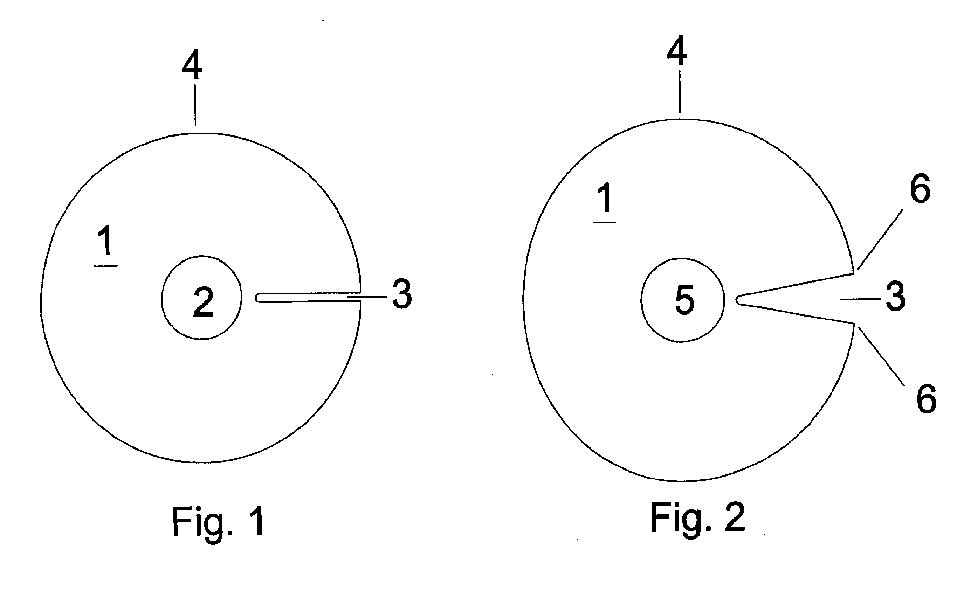

Fig. 1 zeigt einen Querschnitt durch ein Rohr (Verformkörper 1) mit einer nahezu kreisrunden Innenform 2 sowie einer nutförmigen Aussparung 3 im Außenumfang 4 des Rohres. Bevorzugt ist die Tiefe der Aussparung 3 (Schlitz) deutlich größer als die Breite des Schlitzes (siehe Fig. 2, Aussparungsrand 6 bis Aussparungsrand 6).

In Fig. 2 ist dieses Rohr, bei dem die nutförmige Aussparung 3 im Außenumfang 4 aufgeweitet ist, dargestellt, wobei durch die Aufweitung eine Verformung der kreisrunden Innenform 2 hin zu einer ellipsoiden Innenform 5 erfolgt und die beiden außen liegenden Aussparungsränder 6 der nutförmigen Aussparung 3 auseinandergedrückt werden.

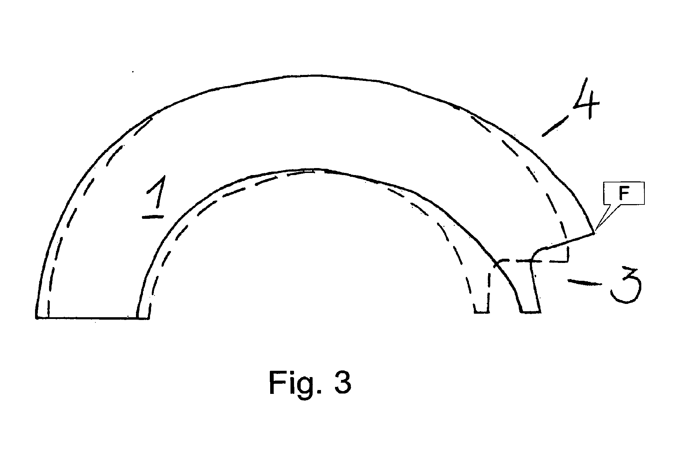

Fig. 3 zeigt die Deformation des Querschnitts A des Rohres beispielsweise bei einem Innendruck von 500 bar in 100-fach überhöhter Darstellung. Dabei wird der Punkt F in während einer Versuchsreihe ermittelten Werte um 0.0304 mm in y-Richtung verschoben, was bezogen auf die halbe Nutbreite von 5 mm einer Dehnung von 6100 ppm entspricht. Die Spannungen liegen bei ihren Maximalwerten von 623 MPa über der angepeilten Maximalspannung von 250 MPa, wobei dabei eine wesentlich höhere Dehnung als notwendig ist, vorliegt. Daher ist eine Restwandstärke optimal, die eine Form ermöglicht, die innerhalb des Bereiches von über 1300 ppm Dehnung und einer Maximalspannung von unter 250 MPa liegt.

So lassen sich für die Dehnungen in Bezug zur Maximalspannung für die einzelnen Querschnitte folgende Kennwerte (in ppm/MPa) ermitteln:

| | | | |
|---|---|---|---|
| Querschnitt | A: | (6100 ppm / 623 MPa): | 4.8 |
| Querschnitt | B: | (6580 ppm / 619 MPa): | 9.8 |
| Querschnitt | C: | (1700 ppm / 212 MPa): | 10.6 |
| Querschnitt | D: | (14500 ppm/969 MPa): | 8.0 |
| Querschnitt | E: | (4080 ppm / 204 MPa): | 20.0 |

Diese Werte sind lediglich beispielhaft und beziehen sich auf die Ausführungsbeispiele in dieser Versuchsreihe, die durchgeführt wurde, um Werte zur optimalen Spannungsverteilung bei geeigneter Wandstärke zur Messung der Drücke der Durchflussmedien zu ermitteln.

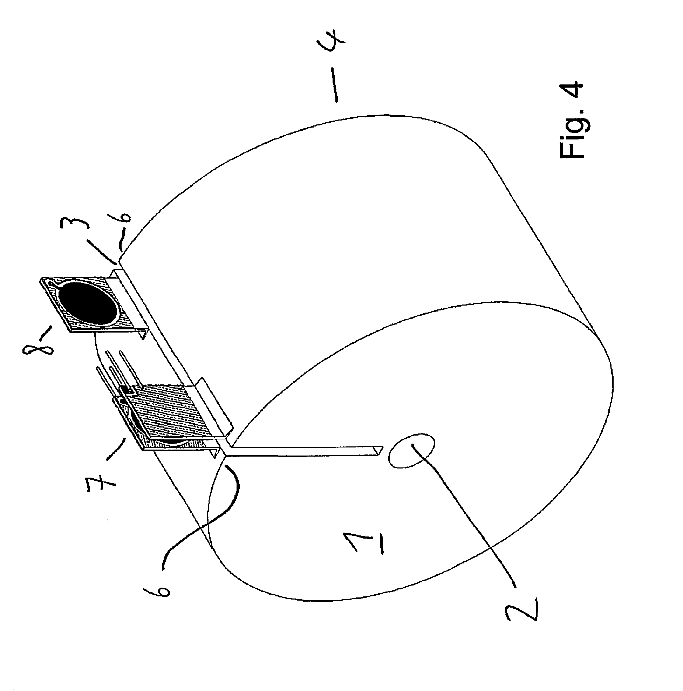

Fig. 4 zeigt beispielhaft schematisch zwei Kondensatoren 7, 8 die auf dem Aussparungsrand 6 angeordnet sind, wobei beim zweiten Kondensator 8 nur eine Hälfte aus Darstellungsgründen gezeigt wird. Ändert sich der Druck im Innenrohr 2, wird der Spalt, also die Aussparung 3, aufgeweitet. Durch die radiale Anordnung des Spaltes ist die Aufweitung am äußeren Ende größer als in der Nähe des Innenrohrs 2. Dadurch wird das Signal mehrfach verstärkt, welches mit den Kondensatoren 7, 8 mittels Kapazitätsänderung aufgezeichnet wird.

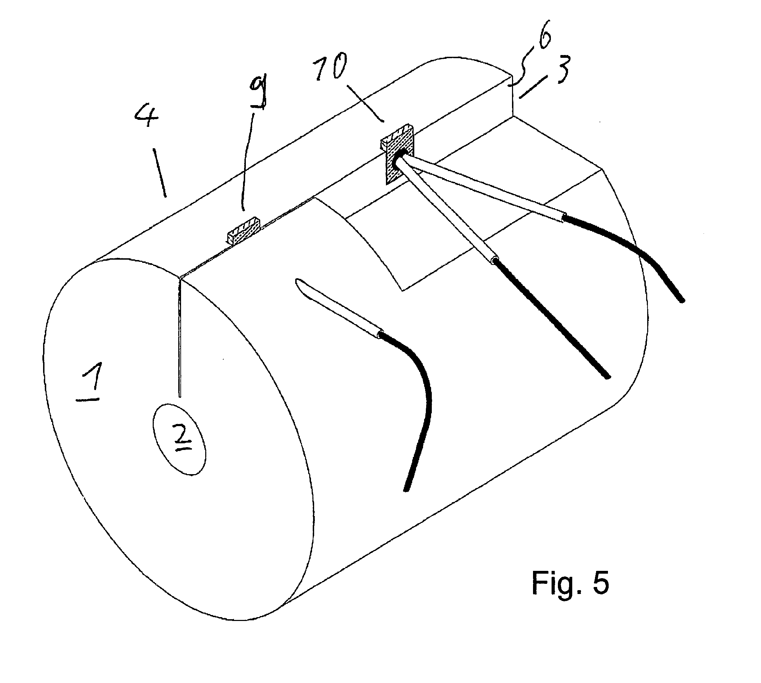

Fig. 5 zeigt beispielhaft zwei optische Messsysteme 9, 10, die die Aufweitung des Schlitzes mittels optischer Längenmessung erfassen. Hierdurch ist erkenntlich, dass die Messsysteme (z.B. die Messsysteme 9, 10) mindestens teilweise versenkt in der Aufweitung angeordnet sein können.

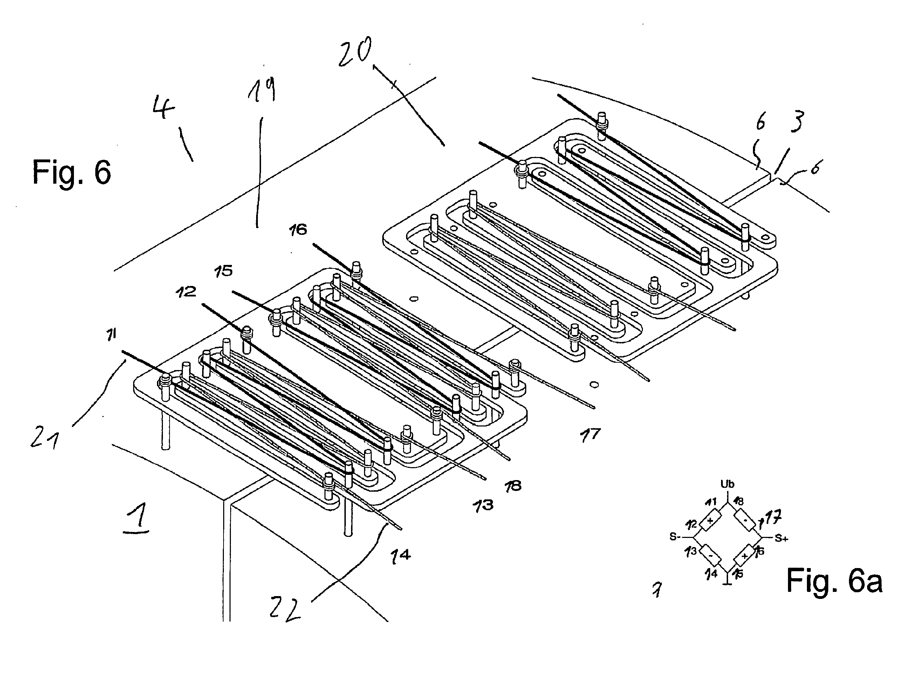

Fig. 6 zeigt beispielhaft zwei Dehnmesseinrichtungen 19, 20, die beispielhaft mittels Drähte 21, 22 die Aufweitung 3 des Schlitzes messen. Das wheatstonsche Schaltungsprinzip ist in Fig. 6a dargestellt. Bei Druckanstieg im Rohr weitet sich der Spalt auf, wodurch der erste Draht 21 gedehnt wird und sein Widerstand steigt und der zweite Draht 22 verkürzt wird und sein Widerstand verringert sich.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

| | |
|---|---|
| 1 | Rohr |
| 2 | Innenform |
| 3 | Aussparung |
| 4 | Außenumfang |
| 5 | Innenform |
| 6 | Aussparungsrand |
| 7 | 1. Kondensator |
| 8 | 2. Kondensator |
| 9 | 1. optisches Messsystem |
| 10 | 2. optisches Messsystem |
| 11-18 | Schaltelemente |
| 19 | 1. Dehnmesseinrichtung |
| 20 | 2. Dehnmesseinrichtung |
| 21 | 1. Draht |
| 22 | 2. Draht |
| F | Punkt |

## Patentansprüche

1. Vorrichtung zur Druckmessung von Medien in Hohlkörpern, wobei der Hohlkörper einen Außenumfang aufweist, bestehend aus einem Verformköper (1) **dadurch gekennzeichnet, dass** dessen durch einen Außenumfang (4) begrenzte Wandstärke mindestens einen als Aussparung (3) ausgestalteten, geschwächten Bereich, der eine Tiefe aufweist und druckabhängig aufweitbar ist, wobei die Aufweitung der Aussparung (3) gemessen wird, aufweist, wobei die Größe der Aufweitung abhängig von der Tiefe der Aussparung (3) ist, und wobei der Außenumfang des Hohlkörpers durch den Außenumfang (4) des Verformkörpers (1) gebildet wird.

2. Vorrichtung nach Anspruch 1,
**dadurch gekennzeichnet,**
**dass** der Hohlkörper ein Durchflusskörper und/oder eine Zuleitung und/ oder ein Adapter und/ oder eine Düse ist.

3. Vorrichtung nach Anspruch 1 oder 2,
**dadurch gekennzeichnet,**
**dass** der mindestens eine geschwächte Bereich schlitzförmig ist.

4. Vorrichtung nach einem der vorhergehenden Ansprüche,
**dadurch gekennzeichnet,**
**dass** der Verformkörper (1) radial mindestens zwei geschwächte Bereiche aufweist.

5. Vorrichtung nach einem der vorhergehenden Ansprüche,
**dadurch gekennzeichnet,**
**dass** der Verformkörper (1) ein zylindrisches Rohr ist.

6. Vorrichtung nach einem der vorhergehenden Ansprüche,
**dadurch gekennzeichnet,**
**dass** der schlitzförmig geschwächte Bereich V-förmig ist oder eine Nut ist oder eine angeschnittene Bohrung ist.

7. Vorrichtung nach einem der vorhergehenden Ansprüche,
**dadurch gekennzeichnet,**
**dass** zur Messung der Aufweitung mindestens eine Messstelle am Umfang des Verformköpers (1) angeordnet ist.

8. Vorrichtung nach einem der vorhergehenden Ansprüche,
**dadurch gekennzeichnet,**
**dass** mehrere Messstellen in Längsrichtung der Strömung des Mediums am Verformkörper (1) angeordnet sind.

9. Vorrichtung nach einem der vorhergehenden Ansprüche,
**dadurch gekennzeichnet,**
**dass** die Vorrichtung zur Druckmessung von Medien in Hohlkörpern als Einbausatz nachrüstbar ist und/oder zum Einsatz in Maschinen ausgestaltet ist.

10. Vorrichtung nach einem der vorhergehenden Ansprüche,
**dadurch gekennzeichnet,**
**dass** die Aufweitung durch einen Aussparungsrand (6) begrenzt ist.

11. Vorrichtung nach Anspruch 10,
**dadurch gekennzeichnet,**
**dass** zur Messung der Aufweitung der Aussparung (3) mindestens ein Kondensator (7, 8) an dem Aussparungsrand (6) angeordnet ist.

12. Vorrichtung nach Anspruch 10,
**dadurch gekennzeichnet,**
**dass** zur Messung der Aufweitung der Aussparung (3) mindestens ein optisches Messsystem (9, 10) in der Nähe des Aussparungsrandes (6) angeordnet ist.

13. Vorrichtung nach Anspruch 10,
**dadurch gekennzeichnet,**
**dass** zur Messung der Aufweitung der Aussparung (3) mindestens eine Dehnmesseinrichtung (19, 20) an dem Aussparungsrand (6) angeordnet ist.

14. Verfahren zur Messung des Drucks von Medien in Hohlkörpern, wobei der Hohlkörper einen Außenumfang aufweist, bei dem ein Verformkörper (1) eingesetzt wird, **dadurch gekennzeichnet, dass** dessen durch einen Außenumfang (4) begrenzte Wandstärke mindestens einen als Aussparung (3) ausgestalteten, geschwächten Bereich, der eine Tiefe aufweist und druckabhängig aufweitbar ist, aufweist, und wobei der Außenumfang des Hohlkörpers durch den Außenumfang (4) des Verformkörpers (1) gebildet wird und die Aufweitung mindestens eines geschwächten Bereichs mittels Längenmessung ermittelt wird.

15. Verfahren nach Anspruch 14,
**dadurch gekennzeichnet,**
**dass** die Messung der Aufweitung am Umfang des Verformkörpers (1) durchgeführt wird.

16. Verfahren nach Anspruch 14 oder 15,
**dadurch gekennzeichnet,**
**dass** an mindestens zwei geschwächten Bereichen Differenzdruckmessungen an mindestens zwei Messstellen in Längsrichtung der Strömung des Mediums durchgeführt werden.

17. Verfahren nach einem der Ansprüche 14 bis 16,
**dadurch gekennzeichnet,**
**dass** das Verfahren mittels optischer Längenmessung durchgeführt wird oder mittels Dehnmessstreifen durchgeführt wird oder kapazitiv durchgeführt wird oder induktiv durchgeführt wird oder rein mechanisch durchgeführt wird oder hydraulisch durchgeführt wird oder pneumatisch durchgeführt wird odgl..

18. Verfahren nach einem der Ansprüche 14 bis 17,
**dadurch gekennzeichnet,**
**dass** eine Vorrichtung zur Druckmessung von Medien in Hohlkörpern nach einem der Ansprüche 1 bis 13 eingesetzt wird.

## Claims

1. A device for measuring the pressure of media in hollow bodies, wherein the hollow body comprises an external circumference, comprising a deformable body (1), **characterised in that** its wall thickness limited by an external circumference (4) comprises at least one weakened region constituted as a recess (3), said region having a depth and being expandable in a pressure-dependent manner, wherein the expansion of the recess (3) is measured, wherein the size of the expansion is dependent on the depth of the recess (3) and wherein the external circumference of the hollow body is formed by the external circumference (4) of the deformable body (1).

2. The device according to claim 1,
**characterised in that**
the hollow body is a through-flow body and/or a supply line and/or an adapter and/or a nozzle.

3. The device according to claim 1 or 2,
**characterised in that**
the at least one weakened region is slot-shaped.

4. The device according to any one of the preceding claims,
**characterised in that**
the deformable body (1) comprises radially at least two weakened regions.

5. The device according to any one of the preceding claims,
**characterised in that**
the deformable body (1) is a cylindrical tube.

6. The device according to any one of the preceding claims,
**characterised in that**
the slot-shaped weakened region is V-shaped or is a groove or is a notched bore.

7. The device according to any one of the preceding claims,
**characterised in that**
at least one measuring point is disposed on the circumference of the deformable body (1) for the measurement of the expansion.

8. The device according to any one of the preceding claims,
**characterised in that**
a plurality of measurement points are disposed on the deformable body (1) in the longitudinal direction of the flow of the medium.

9. The device according to any one of the preceding claims,
**characterised in that**
the device for measuring the pressure of media in hollow bodies can be retrofitted as a build-in set and/or is constituted for use in machines.

10. The device according to any one of the preceding claims,
**characterised in that**
the expansion is limited by a recess edge (6).

11. The device according to claim 10,
**characterised in that**
at least one capacitor (7, 8) is disposed at the recess edge (6) in order to measure the expansion of the recess (3).

12. The device according to claim 10,
**characterised in that**
at least one optical measuring system (9, 10) is disposed in the vicinity of the recess edge (6) in order to measure the expansion of the recess (3).

13. The device according to claim 10,
**characterised in that**
at least one expansion measuring device (19, 20) is disposed at the recess edge (6) in order to measure the expansion of the recess (3).

14. A method for measuring the pressure of media in hollow bodies, wherein the hollow body comprises an external circumference, wherein a deformable body (1) is used, **characterised in that** its wall thickness limited by an external circumference (4) comprises at least one weakened region constituted as a recess (3), said region having a depth and being expandable in a pressure-dependent manner, and wherein the external circumference of the hollow body is formed by the external circumference (4) of the deformable body (1) and the expansion of at least one weakened region is ascertained by means of a length measurement.

15. The method according to claim 14,
**characterised in that**
the measurement of the expansion is carried out at the circumference of the deformable body (1).

16. The method according to claim 14 or 15,
**characterised in that**,
in at least two weakened regions, differential pressure measurements are carried out at at least two measurement points in the longitudinal direction of the flow of the medium.

17. The method according to any one of claims 14 to 16,
**characterised in that**
the method is carried out by means of an optical length measurement or is carried out by means of a strain gauge or is carried out capacitively or is carried out inductively or is carried out purely mechanically or is carried out hydraulically or is carried out pneumatically or suchlike.

18. The method according to any one of claims 14 to 17,
**characterised in that**
a device for measuring the pressure of media in hollow bodies according to any one of claims 1 to 13 is used.

## Revendications

1. Dispositif destiné à mesurer la pression de milieux dans des corps creux, le corps creux présentant un périmètre extérieur, composé d'un corps de déformation (1) **caractérisé en ce que** ce corps de déformation présente au moins une zone réduite, conçue comme un évidement (3) par une épaisseur de paroi limitée par un périmètre extérieur (4), qui présente une profondeur et est élargissable en fonction de la pression, l'élargissement de l'évidement (3) étant mesuré, la taille de l'élargissement étant fonction de la profondeur de l'évidement (3) et le périmètre extérieur du corps creux étant formé par le périmètre extérieur (4) du corps de déformation (1).

2. Dispositif selon la revendication 1 **caractérisé en ce que** le corps creux est un corps d'écoulement et/ou un conduit d'alimentation et/ou un adaptateur et/ou une buse.

3. Dispositif selon la revendication 1 ou 2 **caractérisé en ce qu'**au moins une zone réduite est en forme de fente.

4. Dispositif selon une quelconque des revendications précédentes **caractérisé en ce que** le corps de déformation (1) présente dans le sens radial au moins deux zones réduites.

5. Dispositif selon une quelconque des revendications précédentes **caractérisé en ce que** le corps de déformation (1) est un tube cylindrique.

6. Dispositif selon une quelconque des revendications précédentes **caractérisé en ce que** la zone réduite en forme de fente est en forme de "V" ou est une rainure ou est un alésage lamé.

7. Dispositif selon une quelconque des revendications précédentes **caractérisé en ce qu**'au moins un point de mesure est disposé sur le périmètre du corps de déformation (1) pour mesurer l'élargissement.

8. Dispositif selon une quelconque des revendications précédentes **caractérisé en ce que** plusieurs points de mesure sont disposés sur le corps de déformation (1) dans le sens longitudinal de l'écoulement du milieu.

9. Dispositif selon une quelconque des revendications précédentes **caractérisé en ce que** le dispositif destiné à la mesure de pression de milieux dans des corps creux peut être adapté comme ensemble de montage et/ou conçu pour être intégré dans des machines.

10. Dispositif selon une quelconque des revendications précédentes **caractérisé en ce que** l'élargissement est limité par un bord d'évidement (6).

11. Dispositif selon la revendication 10 **caractérisé en ce qu'**au moins un condensateur (7, 8) est disposé sur le bord de l'évidement (6) pour mesurer l'élargissement de l'évidement (3).

12. Dispositif selon la revendication 10 **caractérisé en ce qu**'au moins un système de mesure (9, 10) optique est disposé à proximité du bord d'évidement (6) pour mesurer l'élargissement de l'évidement (3).

13. Dispositif selon la revendication 10 **caractérisé en ce qu'**au moins un système de mesure d'extension (19, 20) est disposé sur le bord d'évidement (6) pour mesurer l'élargissement de l'évidement (3).

14. Procédé destiné à mesurer la pression de milieux dans des corps creux, le corps creux présentant un périmètre extérieur, pour lequel un corps de déformation (1) est introduit **caractérisé en ce que** ce corps de déformation présente au moins une zone réduite, conçue comme un évidement (3) par une épaisseur de paroi limitée par un périmètre extérieur (4), qui présente une profondeur et est élargissable en fonction de la pression et le périmètre extérieur du corps creux étant formé par le périmètre extérieur (4) du corps de déformation (1) et l'élargissement au moins d'une zone réduite est déterminé au moyen d'une mesure longitudinale.

15. Dispositif selon la revendication 14 **caractérisé en ce que** la mesure de l'élargissement est exécutée sur le périmètre du corps de déformation (1).

16. Dispositif selon la revendication 14 ou 15 **caractérisé en ce que** sur au moins deux zones réduites, des mesures de pression différentielle sont exécutées sur au moins deux points de mesure dans le sens longitudinal de l'écoulement du milieu.

17. Procédé selon une quelconque des revendications 14 à 16 **caractérisé en ce que** le procédé est exécuté au moyen de mesure longitudinale optique ou au moyen d'extensomètres à résistance ou est exécuté de façon capacitive, ou inductive ou purement mécanique, ou hydraulique, ou pneumatique ou de toute façon analogue.

18. Procédé selon une quelconque des revendications 14 à 17 **caractérisé en ce qu**'un dispositif destiné à la mesure de pression de milieux dans des corps creux est utilisé selon les revendications 1 à 13.
